# EUROPÄISCHE PATENTSCHRIFT

(11) **EP 3 772 595 B1**
(45) Veröffentlichungstag und Bekanntmachung des Hinweises auf die Patenterteilung: **02.08.2023**
(21) Anmeldenummer: 19190938.1
(22) Anmeldetag: 09.08.2019
(51) Int. Cl.: F15B 15/28, F15B 19/00

(54) **SENSOREINHEIT FÜR FLUIDIKZYLINDER UND FLUIDIKZYLINDER**
SENSOR UNIT FOR FLUID CYLINDER AND FLUID CYLINDER
UNITÉ DE CAPTEUR POUR CYLINDRE FLUIDIQUE ET CYLINDRE FLUIDIQUE

(43) Veröffentlichungstag der Anmeldung: 10.02.2021
(73) Patentinhaber: Siko GmbH, 79256 Buchenbach (DE)
(72) Erfinder: ROTH, Mathias, 79256 Buchenbach (DE); THOMA, Hanspeter, 79232 March (DE)
(74) Vertreter: Mertzlufft-Paufler, Cornelius

(56) Entgegenhaltungen:
- WO-A1-85/00204
- WO-A1-2006/056214
- WO-A1-2016/142194
- DE-A1- 10 052 053
- DE-A1- 19 903 183
- DE-A1-102014 005 637
- DE-A1-102018 122 122

## Beschreibung

Die Erfindung betrifft eine Sensoreinheit für einen Fluidikzylinder mit einem Grundträger, an dem eine umlaufende Dichtung ausgebildet ist, sodass ein Innenraum eines Fluidikzylinders abdichtbar ist und mit einem Positionssensor zur Erfassung einer Position des Kolbens.

Solche Sensoreinheiten sind bekannt und werden beispielsweise in Hydraulik- und Pneumatikzylindern eingesetzt, um die aktuelle Position des Kolbens zu erfassen. Dabei begrenzt der Grundträger durch die umlaufende Dichtung den Fluid führenden Innenraum gegenüber einem drucklosen Bereich des Fluidikzylinders.

Die DE 10 2014 005 637 A1 beschreibt eine Fluid-Arbeitsgerätschaft, bei der eine Sensoreinrichtung eine Aussage über den Zustand des im Fluidraum befindlichen Fluids ermöglicht.

Die DE 10 2018 122 122 A1 beschreibt eine Linearpositionsmessvorrichtung mit einem länglichem Fühlerstab und einem Fluidsensor, um Eigenschaften des Fluids zu bestimmen.

Die WO 2006/056214 A1 beschreibt eine Diagnosevorrichtung für eine pneumatische Ventil-Aktuator-Anordnung mit einem Drucksensor, einem Volumenstromsensor und Positionssensoren zur Positionserfassung.

Die DE 199 03 183 A1 beschreibt eine Hochfrequenz-Abstandsmesseinrichtung mit einer als Sensor ausgebildeten Antenne und einem einseitig offenen Hohlleiter.

Die WO 2016/142194 A1 beschreibt eine Vorrichtung und ein Verfahren zur Bestimmung der Masse einer Ladung eines Kipplasters mit einer hydraulisch betätigten Lademulde, wobei wenigstens ein Druck-Parameter in Bezug auf den Hydraulikdruck innerhalb des Hydraulikzylinders.

Die Erfindung beschäftigt sich damit, den Anwendungsbereich derartiger Sensoreinheiten zu vergrößern.

Diese Aufgabe wird durch eine Sensoreinheit nach Anspruch 1, einem Fluidikzylinder nach Anspruch 10 sowie einem Verfahren nach Anspruch 7 gelöst.

Die erfindungsgemäße Sensoreinheit weist demnach einen Drucksensor zur Erfassung eines Drucks im Innenraum auf.

Der Vorteil ist dabei, dass die Ausgangssignale des Drucksensors und des Positionssensors zur Bildung einer Größe über einen Betriebszustand des Arbeitszylinders verrechnet werden können.

Dies kann beispielsweise dadurch gegeben sein, dass eine Belastung der Kolbenstange über den Druck erfasst wird und eine Position des Kolbens über den Positionssensor erfasst wird.

Hier ergeben sich nun vielfältige Möglichkeiten. Beispielsweise kann bei einem Mobilkran eine Gewichtserkennung im Ausleger erfolgen oder es kann bei einer Arbeitsmaschine eine Erkennung der Bodenabstützung erfolgen. Es kann auch eine Fehlererkennung erfolgen, die beispielsweise unterscheidet ob sich der Kolben bewegt, ohne dass sich der Druck ändert.

Insbesondere vorteilhaft kann es sein, wenn der Positionssensor und der Drucksensor im Innenraum angeordnet sind. Auf diese Weise sind die Sensoren vor äußeren Einflüssen geschützt, insbesondere vor mechanischen Beschädigungen.

Der Drucksensor kann auf vielfältige Weise realisiert sein. Es können beispielsweise handelsübliche Drucksensoren verbaut sein.

Der erfindungsgemäße druckvariable Bereich kann im Innenraum ausgebildet werden, und, der erfindungsgemäße Abnehmer kann vorzugsweise außerhalb des Innenraums angeordnet werden. diese Weise ist der Abnehmer nicht im Fluid angeordnet, so dass der Abnehmer nicht Fluidfest sein muss und demnach wesentlich einfacher und kostengünstiger sein kann.

Erfindungsgemäß ist der druckvariable Bereich als eine Membran ausgebildet. Diese Membran wird durch Druckbeaufschlagung durch das Fluid ausgelenkt oder verformt.

Die Membran ist durch Verdünnung eines Wandbereichs des Grundträgers gebildet.

Der Vorteil ist dabei, dass die Membran einstückig mit dem Grundträger ausgebildet ist und somit keine Dichtungsmaßnahmen zum Abdichten der Membran notwendig sind. Die Membran kann beispielsweise durch Fräsen von der Rückseite gebildet sein.

Der Grundträger oder allgemein die Sensoreinheit ist so ausgebildet, dass sie in den Innenraum eines Fluidikzylinders einsetzbar ist und durch die umlaufende Dichtung diesen in einen Innenraum, in dem sich das Fluid befindet und einen drucklosen und fluidfreien Raum teilt. Der Kolben ist demnach in dem Innenraum angeordnet und dort durch das Fluid bewegbar.

Vorteilhaft ist es dabei, wenn der Grundträger Mittel zur Befestigung in einem Fluidikzylinder aufweist, beispielsweise eine umlaufende Nut, in die mit einer Madenschraube eingreifbar ist. Dadurch kann eine sichere Fixierung des Grundträgers erreicht werden. Insbesondere kann in einem Fluidikzylinder auch ein axialer Anschlag vorhanden sein, an dem der Grundträger axial anliegt. Somit ist sichergestellt, dass sich der Grundträger bei axialer Druckbeaufschlagung nicht axial verschiebt.

Alternativ oder zusätzlich kann der Grundträger ein Außengewinde aufweisen, so dass der Grundträger in ein Innengewinde innerhalb eines Fluidikzylinders einschraubbar ist.

In einer weiteren alternativen Ausführung kann der Grundträger eine Flanschverbindung zum Verbinden mit einem Fluidikzylinder aufweisen.

Der Positionssensor kann verschiedene Ausgestaltungen aufweisen, die jedoch für die Erfindung unwesentlich sind. Die Erfindung ist daher nicht auf eine spezielle Ausführung des Positionssensors beschränkt.

Dennoch kann es vorteilhaft sein, wenn der Positionssensor zur Erfassung einer Relativbewegung zwischen zwei Bauteilen, insbesondere zwischen Kolben und Grundträger, ausgebildet ist.

Auf diese Weise ist eine unmittelbare Erfassung der Kolbenbewegung möglich und somit eine genaue und schnelle Messung. Die Erfassung kann insbesondere durch Ultraschall, Magnetostriktion oder Induktion erfolgen.

Der Grundträger kann außerhalb des Innenraums eine Auswerteeinheit aufweisen, in der die Sensorwerte erfasst werden. Die Auswerteeinheit kann dazu elektrisch mit dem Positionssensor und dem Drucksensor, insbesondere mit dem Abnehmer, verbunden sein.

Die Erfindung umfasst auch ein Verfahren zur Bestimmung eines Betriebszustands eines Fluidikzylinders gemäß Anspruch 7. Dieses Verfahren ist dadurch gekennzeichnet, dass mittels des Positionssensors eine Position eines Kolbens erfasst wird, dass mittels des Drucksensors ein Druck in einem Innenraum des Fluidikzylinders erfasst wird und dass der Betriebszustand aus der erfassten Position und dem erfassten Druck ermittelt wird.

Auf diese Weise kann beispielsweise eine Belastung der Kolbenstange über den Druck erfasst werden und mit der Position des Kolbens in Bezug gesetzt werden.

Hier ergeben sich nun vielfältige Möglichkeiten zur Ermittlung eines Betriebszustands.

In einer vorteilhaften Ausführung kann der Betriebszustand zur Bestimmung einer Gewichtsbelastung und/oder einer Bodenabstützung verwendet werden. Somit kann beispielsweise bei einem Mobilkran eine Gewichtserkennung im Ausleger erfolgen oder es kann bei einer Arbeitsmaschine eine Erkennung der Bodenabstützung erfolgen. Auf diese Weise kann insbesondere erkannt werden, ob der Boden ausreichend verdichtet ist, um das Gewicht der Arbeitsmaschine und einer Nutzlast zu tragen.

In einer Ausführung kann aus dem Betriebszustand ein Fehlerzustand erkannt werden, in dem eine Positionsänderung in Bezug auf eine Druckänderung gesetzt wird.

Es kann somit beispielsweise erkannt werden, ob sich der Kolben bewegt, ohne dass sich der Druck ändert.

Wenn eine Druckänderung erfolgt, ohne dass sich der Kolben bewegt, kann dadurch beispielsweise ein festsitzender Kolben erkannt werden. Insgesamt ergeben sich noch weitere Betriebszustände die über die Kombination der Sensorwerte erfasst werden können. Die Erfindung ist daher nicht auf einen bestimmten Betriebszustand beschränkt.

Die Erfindung umfasst auch einen Fluidikzylinder gemäß Anspruch 10. Auf diese Weise sind die oben beschriebenen Vorteile erzielbar. Der Kolben ist dabei in einem Innenraum des Fluidikzylinders angeordnet.

Der erfindungsgemäße Fluidikzylinder weist eine erfindungsgemäße Sensoreinheit auf und ist insbesondere zur Durchführung eines erfindungsgemäßen Verfahrens ausgebildet.

Die Erfindung ist nachfolgend mit Bezug auf die beiliegenden Zeichnungen näher erläutert, wobei Fig. 1-6 allerdings keine Sensoreinheiten mit einer erfindungsgemäßen Membran offenbaren.

Es zeigt:
- Fig. 1:: eine Schnittdarstellung eines Fluidikzylinders mit einem magnetostriktiven Positionssensor,
- Fig. 2:: eine Detailansicht der Sensoreinheit der Fig. 1,
- Fig. 3:: eine Schnittdarstellung eines Fluidikzylinders mit einem Seilzug-Positionssensor,
- Fig. 4:: eine Detailansicht der Sensoreinheit der Fig. 3,
- Fig. 5:: eine Schnittdarstellung eines Fluidikzylinders mit einem Ultraschall-Positionssensor.
- Fig. 6:: eine Detailansicht der Sensoreinheit der Fig. 5,

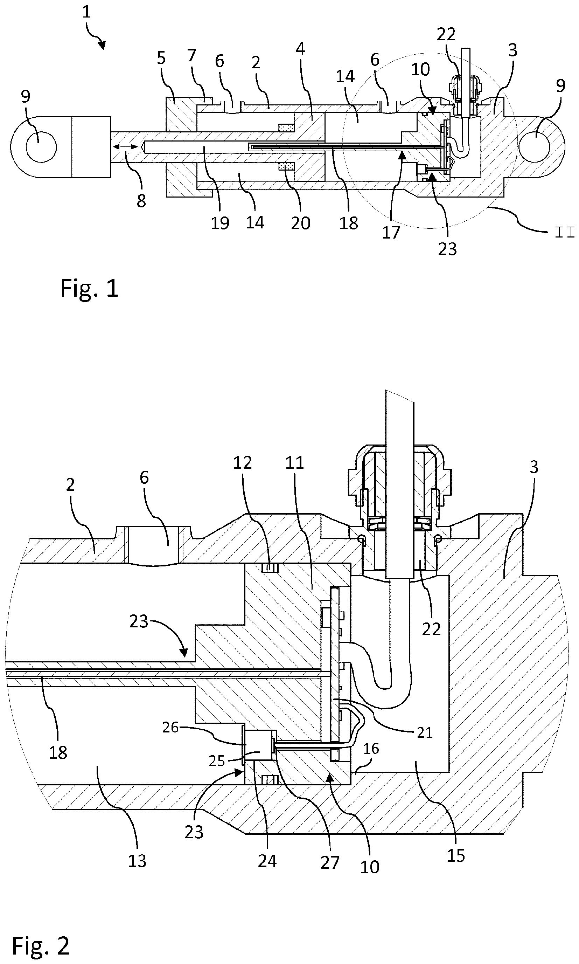

Die Fig. 1 zeigt einen Fluidikzylinder 1 mit einem Zylinderrohr 2, einem Zylinderboden 3, einem Kolben 4 und einem Zylinderkopf 5. Solche Fluidikzylinder 1 sind beispielsweise als Hydraulikzylinder oder Pneumatikzylinder bekannt. Dabei ist der Kolben 4 innerhalb des Zylinderrohrs 2 in axialer Richtung beweglich angeordnet.

Im Zylinderrohr 2 sind zwei Fluidanschlüsse 6 so angeordnet, dass sie eine maximale Bewegung des Kolbens 4 erlauben, also mit möglichst großem, axialem Abstand. Das Zylinderrohr 2 kann einen beliebig geformten, vorzugsweise einen kreisförmigen, Querschnitt aufweisen.

Das Zylinderrohr 2 und der Zylinderboden 3 sind im Beispiel einstückig ausgebildet. Es ist jedoch auch möglich, dass das Zylinderrohr 2 und der Zylinderboden 3 zwei separate Teile sind. Dann könnten die beiden Teile beispielsweise durch ein Gewinde oder eine Flanschverbindung miteinander verbunden sein.

Der Zylinderkopf 5 ist im Beispiel so ausgebildet, dass er auf das Zylinderrohr 2 aufsetzbar ist und ein umlaufender Kragen 7 das Zylinderrohr 2 radial überlappt. Mit dem Kolben 4 ist eine Kolbenstange 8 verbunden, die durch den Zylinderkopf 5 hindurchragt.

Am freien Ende der Kolbenstange 8 und am Zylinderboden 3 sind jeweils Ösen 9 zum Einbau des Fluidikzylinders 1 angeordnet.

Im inneren des Zylinderrohr 2 ist zwischen dem Zylinderboden 3 und dem diesem am nächsten liegenden Fluidanschluss 6 eine Sensoreinheit 10 angeordnet, wie in Fig. 2 genauer dargestellt ist. Diese Sensoreinheit 10 besitzt einen Grundträger 11, der einen Umfang besitzt, der passgenau zum Innenumfang des Zylinderrohrs 2 ausgebildet ist.

Am Umfang des Grundträgers 11 ist eine umlaufende Dichtung 12 angeordnet, die in dem Zylinderrohr 2 den Innenraum 13 begrenzt, in dem der Kolben 4 und das Fluid 14 angeordnet sind. Die Dichtung 12 ist im Beispiel als O-Ring ausgebildet, der in einer umlaufenden Nut im Grundträger 11 eingesetzt ist. Die Dichtung kann jedoch auch auf andere Weise ausgebildet sein.

Auf der anderen Seite der Dichtung 12 ist ein druckloser und insbesondere fluidfreier Raum 15 gebildet. Der Grundträger 11 liegt axial auf einer umlaufenden Kante 16 im drucklosen Raum 15 auf, so dass er durch eine axiale Druckbeaufschlagung durch den Kolben 4 nicht axial verschoben werden kann. Im drucklosen Raum 15 ist am Grundträger 11 eine Auswerteeinheit 21 angeordnet.

Die Sensoreinheit 10 weist im Innenraum einen Positionssensor 17 auf, der im Beispiel als magnetostriktiver Positionssensor ausgebildet ist. Der Positionssensor 17 weist im Beispiel einen Wellenleiter 18 auf, der in axialer Richtung in eine koaxiale Bohrung 19 in der Kolbenstange 8 hineinragt. Am Kolben 4 ist ein Permanentmagnet 20 angeordnet. Der Wellenleiter 18 ragt durch den Grundträger 11 hindurch bis zur Auswerteeinheit 21, in der ein Wandlersystem (nicht gezeigt) zur Erfassung und Auswertung der Körperschallwellen in dem Wellenleiter 18 ausgebildet ist.

Zudem ist an dem Grundträger 11 im Innenraum 13 ein Drucksensor 23 angeordnet. Der Drucksensor 23 weist eine Bohrung 24 auf, die ein Messvolumen 25 definiert. Zum Innenraum 13 ist das Messvolumen 25 durch eine Membran 26 fluiddicht abgeschlossen. Die Membran 26 ist druckabhängig verformbar. Am Boden der Bohrung 24 befindet sich ein Druckabnehmer 27 der elektrisch mit der Auswerteeinheit 21 verbunden ist. Der Druckabnehmer 27 kann beispielsweise kapazitiv oder resistiv arbeiten. Der Vorteil bei dieser Anordnung ist, dass der Druckabnehmer 27 nicht mit Fluid in Kontakt steht und dementsprechend einfach und kostengünstig ausgebildet sein kann. Es können auch einfache herkömmliche Drucksensoren eingesetzt werden.

Im drucklosen Raum 15 ist im Beispiel radial in dem Zylinderrohr 2 eine Buchse 22 angeordnet, über die die Auswerteeinheit 21 elektrisch kontaktierbar ist.

Falls das Zylinderrohr 2 und der Zylinderboden 3 zweiteilig ausgebildet sind, ist es zweckmäßig, wenn die beiden Teile im Bereich des drucklosen Raums 15 miteinander verbunden sind, da dann keine druckfeste Abdichtung notwendig ist.

Die gezeigte Ausführung des Drucksensors 23 ist nur exemplarisch und keinesfalls limitierend. Es sind vielfältige andere Drucksensoren auf dem Markt bekannt, die ohne große Anpassungen in den Grundträger 11 einpassbar sind.

Erfindungsgemäß ist jedoch die Membran 26 durch eine Verdünnung des Grundträgers 11 gebildet. Dazu kann beispielsweise eine Bohrung vom drucklosen Raum 15 bis zur im Innenraum 13 liegenden Oberfläche des Grundträgers 11 herangeführt werden, bis eine gewünschte Membranstärke erreicht ist.

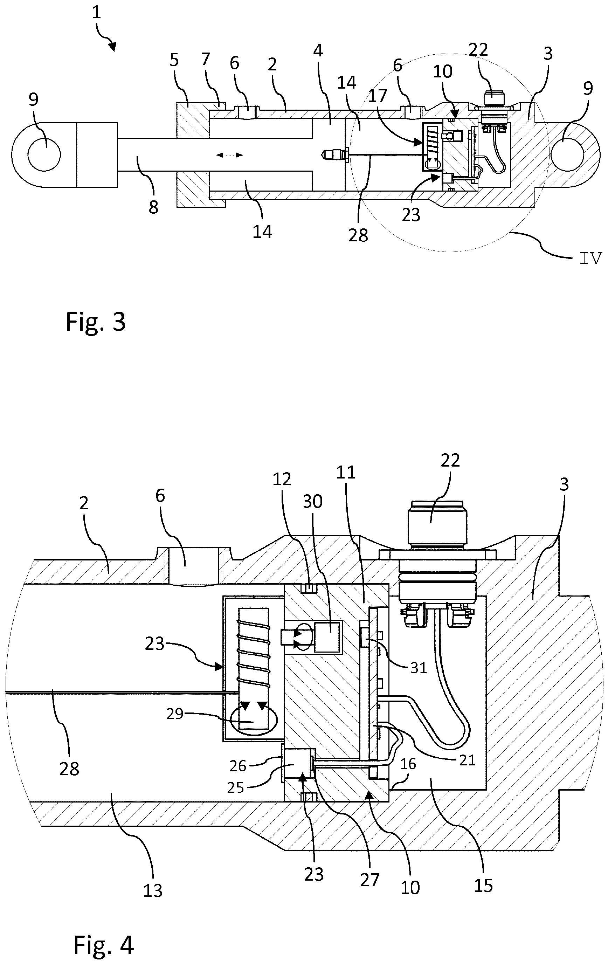

Die Fig. 3 zeigt einen Fluidikzylinder 1, der bis auf den Positionssensor 17 identisch ist zur Fig. 1. Daher werden nachfolgend nur die Unterschiede zur Fig. 1 beschrieben. Die Sensoreinheit 10 ist in Fig. 4 genauer dargestellt.

Der Positionssensor 17 basiert hier auf einem Seilzugabnehmer. Im Beispiel weist der Positionssensor 17 ein Messseil 28 auf, das einerseits am Kolben 4 befestigt ist und andererseits auf einer Seiltrommel 29 aufwickelbar ist. Eine Drehung der Seiltrommel 29 überträgt sich im Beispiel in eine Drehung eines Sensormagneten 30. Auf der Auswerteeinheit 21 ist gegenüber dem Sensormagneten 30 ein Positionssensor 31, beispielsweise ein Hallsensor, angeordnet, der eine Drehung des Sensormagneten 30 erfasst. Der Positionssensor 31 kann eine Position inkrementell oder kodiert erfassen.

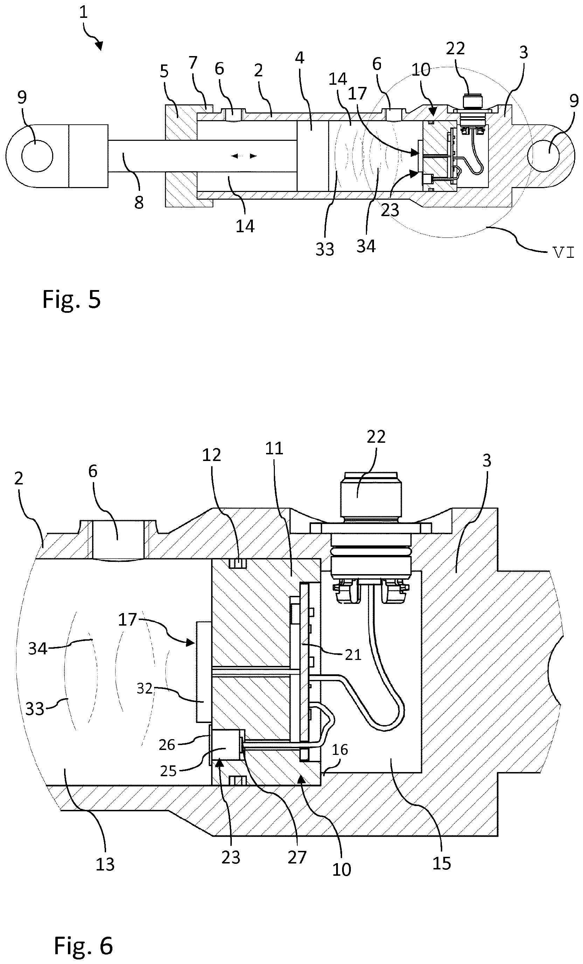

Die Fig. 5 zeigt einen Fluidikzylinder 1, der bis auf den Positionssensor 17 identisch ist zur Fig. 1. Daher werden nachfolgend nur die Unterschiede zur Fig. 1 beschrieben. Die Sensoreinheit 10 ist in Fig. 4 genauer dargestellt.

Der Positionssensor 17 basiert hier auf Ultraschall. Dazu weist die Sensoreinheit 10 im Beispiel eine Ultraschall Sende- und Empfangseinheit 32 auf, die in axialer Richtung ausgerichtet ist. Ultraschallwellen 33 werden so in Richtung Kolben 4 gesendet und an diesem reflektiert. Die reflektierten Ultraschallwellen 34 gelangen wieder zur Sende- und Empfangseinheit 32. Aus der Laufzeit der Ultraschallwellen kann die Position des Kolbens 4 bestimmt werden. Die elektrische Verbindung zur Auswerteeinheit 21 erfolgt durch den Grundträger 11 hindurch.

Neben den hier gezeigten Positionssensoren sind auch andere bekannte Positionssensoren, wie etwa Linearpotentiometer, mit der Erfindung einsetzbar. Ebenso können die gezeigten Messprinzipien auf andere Weise implementiert sein. Gleiches gilt für die Drucksensoren. Die Erfindung ist daher in keiner Weise auf eine der gezeigten Ausführungen beschränkt.

### Bezugszeichenliste

- 1: Fluidikzylinder
- 2: Zylinderrohr
- 3: Zylinderboden
- 4: Kolben
- 5: Zylinderkopf
- 6: Fluidanschluss
- 7: Kragen
- 8: Kolbenstange
- 9: Öse
- 10: Sensoreinheit
- 11: Grundträger
- 12: Dichtung
- 13: Innenraum
- 14: Fluid
- 15: druckloser Raum
- 16: umlaufende Kante
- 17: Positionssensor
- 18: Wellenleiter
- 19: koaxiale Bohrung
- 20: Permanentmagnet
- 21: Auswerteeinheit
- 22: Buchse
- 23: Drucksensor
- 24: Bohrung
- 25: Messvolumen
- 26: Membran
- 27: Druckabnehmer
- 28: Messseil
- 29: Seiltrommel
- 30: Sensormagnet
- 31: Positionssensor
- 32: Ultraschall Sende- und Empfangseinheit
- 33: Ultraschallwellen (senden)
- 34: Ultraschallwellen (empfangen)

## Patentansprüche

1. Sensoreinheit (10) für einen Fluidikzylinder (1), mit einem Grundträger (11), an dem eine umlaufende Dichtung (12) ausgebildet ist, sodass ein Innenraum (13) des Fluidikzylinders (1) abdichtbar ist und mit einem Positionssensor (17) zur Erfassung einer Position des Kolbens, wobei die Sensoreinheit (10) einen Drucksensor (23) zur Erfassung eines Drucks im Innenraum (13) aufweist, wobei an einer Oberfläche des Grundträgers (11) ein druckvariabler Bereich (26) ausgebildet ist, und wobei ein Abnehmer (27) zur Erfassung einer druckabhängigen Formveränderung des druckvariablen Bereichs (26) angeordnet ist, **dadurch gekennzeichnet, dass** der druckvariable Bereich (26) als eine Membran ausgebildet ist, die durch Verdünnung eines Wandbereichs des Grundträgers (11) gebildet ist.

2. Sensoreinheit (10) nach Anspruch 1, **dadurch gekennzeichnet, dass** der Positionssensor (17) und der Drucksensor (23) im Innenraum (13) angeordnet werden können.

3. Sensoreinheit (10) nach einem der Ansprüche 1 oder 2, **dadurch gekennzeichnet, dass** der Grundträger (11) Mittel zur Befestigung in einem Fluidikzylinder (1) aufweist, beispielsweise eine umlaufende Nut, in die mit einer Madenschraube eingreifbar ist.

4. Sensoreinheit (10) nach einem der Ansprüche 1 bis 3, **dadurch gekennzeichnet, dass** der Grundträger (11) ein Außengewinde aufweist, so dass der Grundträger (11) in ein Innengewinde innerhalb eines Fluidikzylinders (1) einschraubbar ist oder dass der Grundträger (11) eine Flanschverbindung zum Verbinden mit einem Fluidikzylinder (1) aufweist.

5. Sensoreinheit (10) nach einem der Ansprüche 1 bis 4, **dadurch gekennzeichnet, dass** der Positionssensor (17) zur Erfassung einer Relativbewegung zwischen zwei Bauteilen, insbesondere zwischen Kolben (4) und Grundträger (11), ausgebildet ist, insbesondere durch Ultraschall, Magnetostriktion oder Induktion.

6. Sensoreinheit (10) nach einem der Ansprüche 1 bis 5, **dadurch gekennzeichnet, dass** der Grundträger (11) eine Auswerteeinheit (21) aufweist, in der die Sensorwerte erfasst werden.

7. Verfahren zur Bestimmung eines Betriebszustands eines Fluidikzylinders (1) mit einer Sensoreinheit nach einem der Ansprüche 1 bis 6, **dadurch gekennzeichnet,**
**dass** mittels des Positionssensors (17) eine Position eines Kolbens (4) erfasst wird, dass mittels des Drucksensors (23) ein Druck in einem Innenraum (13) des Fluidikzylinders (1) erfasst wird und dass der Betriebszustand aus der erfassten Position und dem erfassten Druck ermittelt wird.

8. Verfahren nach Anspruch 7, **dadurch gekennzeichnet, dass** der Betriebszustand zur Bestimmung einer Gewichtsbelastung und/oder einer Bodenabstützung verwendet wird.

9. Verfahren nach Anspruch 7 oder 8, **dadurch gekennzeichnet, dass** aus dem Betriebszustand ein Fehlerzustand erkannt wird, in dem eine Positionsänderung in Bezug auf eine Druckänderung gesetzt wird, insbesondere wobei eine Positionsänderung ohne Druckänderung auf einen Fehlerzustand hinweisen kann.

10. Fluidikzylinder (1) mit einem durch Fluid (14) bewegbaren Kolben (4), einer Sensoreinheit (10) nach einem der Ansprüche 1 bis 6 und einer Auswerteeinheit (21), die insbesondere zur Durchführung des Verfahrens nach einem der Ansprüche 7 bis 9 ausgebildet ist.

## Claims

1. Sensor unit (10) for a fluidic cylinder (1), comprising a main carrier (11), on which a circumferential seal (12) is formed, such that an interior (13) of the fluidic cylinder (1) is sealable, and comprising a position sensor (17) for detecting a position of the piston, the sensor unit (10) having a pressure sensor (23) for detecting a pressure in the interior (13), a pressure-variable region (26) being formed on a surface of the main carrier (11), and a pickup (27) for detecting a pressure-dependent shape change of the pressure-variable region (26) being arranged, **characterized in that** the pressure-variable region (26) is embodied as a membrane formed by the thinning of a wall region of the main carrier (11).

2. Sensor unit (10) according to Claim 1, **characterized in that** the position sensor (17) and the pressure sensor (23) can be arranged in the interior (13).

3. Sensor unit (10) according to either of Claims 1 and 2, **characterized in that** the main carrier (11) has means for securing in a fluidic cylinder (1), for example a circumferential groove in which a grub screw is able to engage.

4. Sensor unit (10) according to any of Claims 1 to 3, **characterized in that** the main carrier (11) has an external thread, such that the main carrier (11) is able to be screwed into an internal thread inside a fluidic cylinder (1), or **in that** the main carrier (11) has a flange connection for connecting to a fluidic cylinder (1) .

5. Sensor unit (10) according to any of Claims 1 to 4, **characterized in that** the position sensor (17) is designed to detect a relative movement between two components, in particular between piston (4) and main carrier (11), in particular by way of ultrasound, magnetostriction or induction.

6. Sensor unit (10) according to any of Claims 1 to 5, **characterized in that** the main carrier (11) has an evaluation unit (21), in which the sensor values are detected.

7. Method for determining an operating state of a fluidic cylinder (1) with a sensor unit according to any of Claims 1 to 6, **characterized in that** a position of a piston (4) is detected by means of the position sensor (17), **in that** a pressure in an interior (13) of the fluidic cylinder (1) is detected by means of the pressure sensor (23), and **in that** the operating state is ascertained from the detected position and the detected pressure.

8. Method according to Claim 7, **characterized in that** the operating state is used to determine a weight load and/or a ground support.

9. Method according to Claim 7 or 8, **characterized in that** a fault state is recognized from the operating state, in which fault state a position change is related to a pressure change, in particular wherein a position change without pressure change can indicate a fault state.

10. Fluidic cylinder (1) comprising a piston (4) movable by fluid (14), a sensor unit (10) according to any of Claims 1 to 6, and an evaluation unit (21), which is designed in particular to carry out the method according to any of Claims 7 to 9.

## Revendications

1. Unité de capteur (10) pour un cylindre fluidique (1), avec un support de base (11) sur lequel un joint périphérique (12) est formé de sorte qu'un espace intérieur (13) du cylindre fluidique (1) peut être étanchéifié et avec un capteur de position (17) pour détecter une position du piston, cette unité de capteur (10) comportant un capteur de pression (23) pour détecter une pression dans l'espace intérieur (13), une zone de pression variable (26) étant formée sur une surface du support de base (11) et un détecteur (27) étant agencé pour détecter un changement de forme de la zone de pression variable (26) en fonction de la pression, **caractérisée en ce que** la zone de pression variable (26) est configurée comme une membrane qui est formée par l'amincissement d'une zone de paroi du support de base (11).

2. Unité de capteur (10) selon la revendication 1, **caractérisée en ce que** le capteur de position (17) et le capteur de pression (23) peuvent être agencés dans l'espace intérieur (13).

3. Unité de capteur (10) selon une des revendications 1 ou 2, **caractérisée en ce que** le support de base (11) comporte un moyen de fixation dans un cylindre fluidique (1), par exemple une gorge périphérique dans laquelle il est possible d'entrer en prise avec une vis sans tête.

4. Unité de capteur (10) selon une des revendications 1 à 3, **caractérisée en ce que** le support de base (11) présente un filetage extérieur, de sorte que le support de base (11) peut être vissé dans un filetage intérieur à l'intérieur d'un cylindre fluidique (1) ou que le support de base (11) présente un raccord à bride pour le relier avec le cylindre fluidique (1).

5. Unité de capteur (10) selon une des revendications 1 à 4, **caractérisée en ce que** le capteur de position (17) est configuré pour détecter un mouvement relatif entre deux composants, en particulier entre le piston (4) et le support de base (11), en particulier par ultrasons, magnétostriction ou induction.

6. Unité de capteur (10) selon une des revendications 1 à 5, **caractérisée en ce que** le support de base (11) comporte une unité d'évaluation (21) dans laquelle les valeurs de capteur sont enregistrées.

7. Procédé pour déterminer un état de fonctionnement d'un cylindre fluidique (1) avec une unité de capteur selon une des revendications 1 à 6, **caractérisé en ce qu'**une position d'un piston (4) est détectée au moyen du capteur de position (17), qu'une pression dans un espace intérieur (13) du cylindre fluidique (1) est détectée au moyen du capteur de pression (23) et que l'état de fonctionnement est déterminé à partir de la position détectée et de la pression détectée.

8. Procédé selon la revendication 7, **caractérisé en ce que** l'état de fonctionnement est utilisé pour déterminer une charge pondérale et/ou un appui au sol.

9. Procédé selon la revendication 7 ou 8, **caractérisé en ce qu'**à partir de l'état de fonctionnement est détecté un état de défaut dans lequel un changement de position est défini par rapport à un changement de pression, en particulier un changement de position sans changement de pression pouvant signaler un état de défaut.

10. Cylindre fluidique (1) avec un piston (4) pouvant être mû par un fluide (14), une unité de capteur (10) selon une des revendications 1 à 6 et une unité d'évaluation (21) qui est configurée en particulier pour mettre en oeuvre le procédé selon une des revendications 7 à 9.
